Europäisches Patentamt

European Patent Office

Office européen des brevets

(19)

(11) Publication number: **0 140 650
B1**

# EUROPEAN PATENT SPECIFICATION

(12)

(45) Date of publication of patent specification: **23.08.89**

(51) Int. Cl.⁴: **H 04 N 5/232,** G 03 B 3/10

(21) Application number: **84307163.0**

(22) Date of filing: **18.10.84**

(54) Automatic focusing device for a video camera.

(30) Priority: **19.10.83 JP 195635/83
19.10.83 JP 195665/83
20.10.83 JP 196322/83**

(43) Date of publication of application:
**08.05.85 Bulletin 85/19**

(45) Publication of the grant of the patent:
**23.08.89 Bulletin 89/34**

(84) Designated Contracting States:
**DE FR GB**

(56) References cited:
**GB-A-2 076 551
US-A-3 906 389
US-A-4 294 531
US-A-4 389 106
US-A-4 445 029**

(73) Proprietor: **Matsushita Electric Industrial Co.,
Ltd.
1006, Oaza Kadoma
Kadoma-shi Osaka-fu, 571 (JP)**

(72) Inventor: **Hirao, Yoshiaki
4-11-12, Furuichi
Habikino-shi Osaka-fu 583 (JP)**
Inventor: **Kuga, Ryuichiro
6-4-205, Myokenzaka
Katano-shi Osaka-fu 576 (JP)**
Inventor: **Nagaoka, Yoshitomi
11-9, Naritaminami-cho
Neyagawa-shi Osaka-fu 572 (JP)**

(74) Representative: **Crawford, Andrew Birkby et al
A.A. THORNTON & CO. Northumberland House
303-306 High Holborn
London WC2A 1AY (GB)**

Courier Press, Leamington Spa, England.

## Description

This invention relates to an automatic focusing device which focuses an image of an object to be photographed or shot with accuracy on the predetermined position when a video camera is focused.

Various automatic focusing devices for cameras have hitherto been proposed and put into practical use, which have been widely used also in the field of video camera next to the field of a still camera.

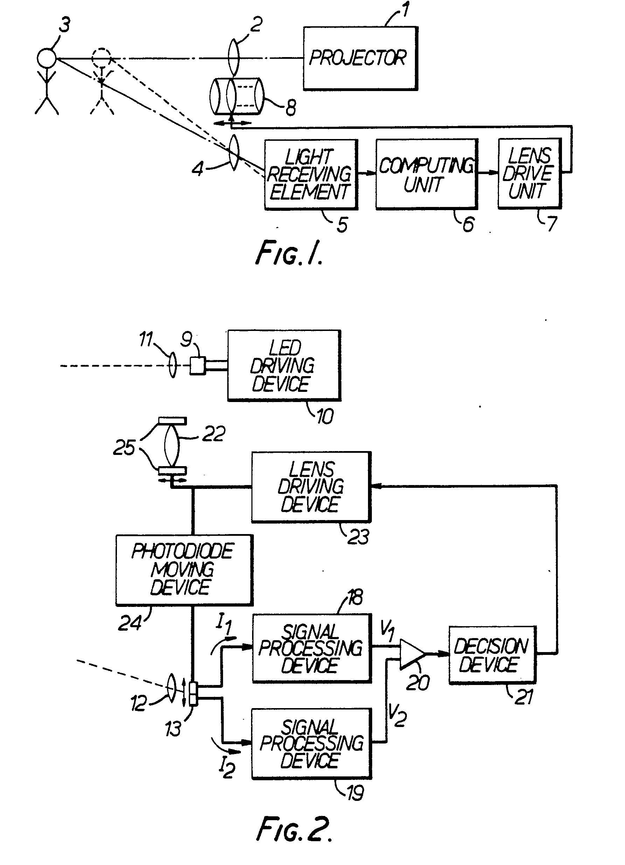

There is one effective system for the focusing device appliable to the video camera, which projects a distance measuring signal, such as the infrared ray or the ultra sonic wave, to an object to be photographed or shot (to be hereinafter called the object), receives the distance measuring signal reflected from the object, and drives a camera lens toward the proper focusing position on the basis of the distance measuring signal (such system will hereinafter be called the active focusing system). The principle of the active focusing system using the infrared ray is shown in Fig. 1, in which the infrared ray for mesauring distance is projected from a projector 1, reaching a distance measuring object 3 through a converging lens 2, and thereafter is reflected from the object 3 to be incident on a light receiving element 5 through a converting lens 4, at which time if the distance between the projector 1 and the object 3 and that between the light receiving element 5 and the object 3 vary, an angle of incidence of the reflected light on the light receiving element 5, or the spot of the same at the surface of light receiving element 5, varies, so that a computing unit 6 executes the predetermined computation based on the angle of incidence or the spot of the reflected light. A lens drive unit 7 drives a photographing lens 8 comprising a plurality of lenses (to be hereinafter called merely the photographing lens) to a proper focusing spot on the basis of the computation result by the computing unit 6 to thereby complete the focusing.

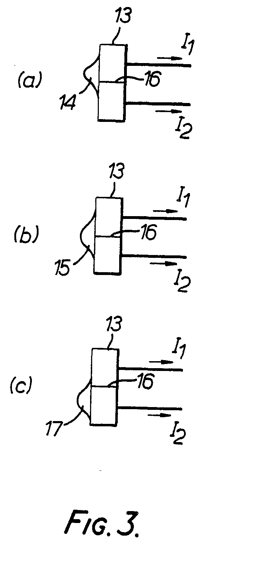

Fig. 2 is a schematic representation of a conventional example of the active system automatic focusing device using the infrared ray, in which an infrared light emitting diode 9 (to be hereinafter called the infrared LED) projects the distance measuring infrared ray modulated by a constant frequency or projected intermittently, by a LED driving device 10, thereby distinguishing the emitted infrared ray from the ambient noise infrared ray. The distance measuring infrared ray passes through a converging lens 11 and reflected by an object (not shown), the reflected light passing through a converging lens 12 to image-form the light spot on a photodiode 13 divided into two (to be hereinafter called the two-divided PD). The two-divided PD 13 outputs signal currents $I_1$ and $I_2$ of intensity corresponding to the light spot on the surface of the same. In other words, when the light spot 14 (Fig. 3) shifts upwardly from the parting line 16 at the two-divided PD 13 as shown in Fig. 3-(a), the relation of intensity between the signal currents $I_1$ and $I_2$ is given in the following inequality:

$$I_1 > I_2 \qquad (1)$$

When the light spot 15 is centered just on the parting line 16 at the two-divided PD as shown in Fig. 3-(b), the afore-said relation is given in the following equation:

$$I_1 = I_2 \qquad (2)$$

When the light spot 17 shifts downwardly from the parting line 16 as shown in Fig. 3-(c), the relation is given in the following inequality:

$$I_1 < I_2 \qquad (3)$$

Referring again to Fig. 2, the photocurrents $I_1$ and $I_2$ output from the two-divided PD 13 are converted by first and second signal processing devices 18 and 19 into voltages $V_1$ and $V_2$ proportional to the intensity of photocurrents $I_1$ and $I_2$ respectively. A comparator 20 compares the voltages $V_1$ and $V_2$ and a decision device 21 controls a lens driving device 23 to move a focusing mechanism 25 for a photographing lens 22 (schematically shown by a single convex lens) forwardly or rearwardly on the basis of the output of comparator 20. A photodiode moving device 24 moves the two-divided PD 13 in the directions of the arrows in Fig. 2 in association with the focusing mechanism 25, so that the focus adjusting mechanism 25 is stopped at the position where the photocurrents output from the two-divided PD 13 become equal to each other to thereby materialize the automatic focusing. In this conventional example, the mounting position and a mechanical movement of two-divided PD 13 are pre-adjusted so that a shift of photographing lens 22 (of the focusing lens group) and that of two-divided PD are adapted to have therebetween a ratio of 1:1.

Accordingly, the decision device 21 controls the moving direction of the photographing lens 22 so that the photocurrents $I_1$ and $I_2$ outputted from the two-divided PD 13 become always equal to each other and stop the lens at the proper focusing spot, thereby realizing the automatic focusing.

The conventional example is an effective focusing method having the characteristic as the active system focusing device, in which the distance measuring accuracy is hard to be affected by intensity of illumination of the object or a contrast and the use of infrared LED enables a directional angle to be relatively restricted. However, it is necessary for the video camera to take a photograph of an object in continuous motion, whereby the aforesaid example need project the infrared ray always continuously while the photographing lens is moving toward the proper focusing spot. Hence, in a case where a moving range is larger (for example, it takes several seconds to change the object in a short distance to that in a long distance), a large current consumption is accompanied by the movement. Usually, for the use of the example, a current even of 100 to 300 mA is consumed always during the focusing of photographing lens, which is a serious problem for the video camera focusing device which is prerequisite of operation by batteries from the viewpoint of portability. Also, it is necessary for the photodiode moving device to operate in association with the focusing device for the photographing lens, so that the photodiode mounting position is limited to be large restriction on the design of mechanism for the photographing lens in the video camera.

Another conventional automatic focusing device using the same principle as that of the device shown in Fig. 2 is disclosed by U.S. Patent US—A—3,906,389. This device uses a comparator circuit comprising an amplifier having its input fed as a difference corresponding to $I_1-I_2$ and whose gain is controlled by a sum corresponding to $I_1+I_2$ to provide an amplifier output stabilized over a large range of input variation. However, this device also has the above mentioned problem of large power consumption if used for a video camera.

Still another conventional automatic focusing device utilizing another principle is disclosed by U.S. Patent US—A—4,445,029. This device produces a distance indicating signal indicative of a distance to an object to be photographed corresponding to the value of $(I_1-I_2)/(I_1+I_2)$, and is provided with a lens position signal generating unit for generating a lens position signal indicative of a position of the photographing lens. The photographing lens is driven so that the lens position signal becomes equal to the distance indicating signal. However, this device also has the above mentioned problem of large power consumption due to continuous ray projection operation if used for a video camera.

An object of the invention is to provide an automatic focusing device for the video camera, which maintains the distance measuring performance with high accuracy while the device having powersaving function to largely save current consumption, whereby a distance measuring projector and a light receiving element can be installed without hindrance to the design of photographing lens mechanism at the video camera.

The present invention provides an automatic focusing device for a video camera, comprising a projection means for projecting a distance measuring ray, a converging lens for converging the distance measuring ray which has been reflected from an object to be photographed, a light position detector positioned at a focus of said converging lens for outputting two photocurrents which have a ratio therebetween varying corresponding to a position of a light spot formed on said light position defector by the reflected distance measuring ray, a computing means for computing a sum of and a difference between said two photocurrents, a photographic lens for photographing said oject including a focusing lens for focusing said photographic lens, a lens encoder for detecting a position of said focusing lens and outputting a focus lens position signal indicative of the detected position, a control means for producing a distance indicating signal indicative of a distance to said object from the sum of and the difference between said two photocurrents and producing a difference signal between said distance indicating signal and said focus lens position signal, and a lens driving means for driving said focusing lens forwardly or backwardly according to said difference signal,

characterised in that said control means comprises: a first comparator which compares, after said projection means starts ray projection, the sum of said two photocurrents with a predetermined value and outputs a control pulse when the value of the sum of said two photocurrents reaches said predetermined value; and a second comparator which is responsive to said control pulse for holding, as said distance indicating signal, a value of the difference between said two photocurrents at the time of having received said control pulse and comparing the held value of the difference between said two photocurrents with said focusing lens position signal to produce, as said difference signal, a signal indicative of a difference between the held value and said focusing lens position signal, whereby said lens driving means drives said focusing lens until the value of said focusing lens position signal reaches the held value of the difference between said two photocurrents, said control pulse being applied also to said projection means to allow said projection means to stop ray projection.

The above and other objects and novel features of the invention will more fully appear from the following detailed description given by way of example when taken in connection with the accompanying drawings.

Fig. 1 is a schematic block diagram showing the principle of the active-focusing system.

Fig. 2 is a block diagram of the principal portion of the conventional active-focusing device.

Fig. 3-(a), -(b) and -(c) are views exemplary of the principle of operation of a two-divided photodiode used for the conventional example.

Fig. 4 is a block diagram of a first embodiment of the invention.

Fig. 5 is a schematic view showing the arrangement and distance measuring principle of an infrared LED and light position detected used in the first embodiment of Fig. 4.

Figs. 6-(a) and -(b) are graphs showing the time response of output values $V_+^*(t)$ and $V_-^*(t)$ of computing means in proportion to a sum of and a difference between two photocurrent outputs in the Fig. 4 embodiment.

Fig. 7 is a timing chart of light emission control of the infrared LED in the Fig. 4 embodiment.

Figs. 8 through 12 are block diagrams of second to sixth modified embodiments of the invention.

Fig. 13 is a timing chart of light emission control of the infrared LED in the sixth embodiment of the invention.

## Description of the preferred embodiments

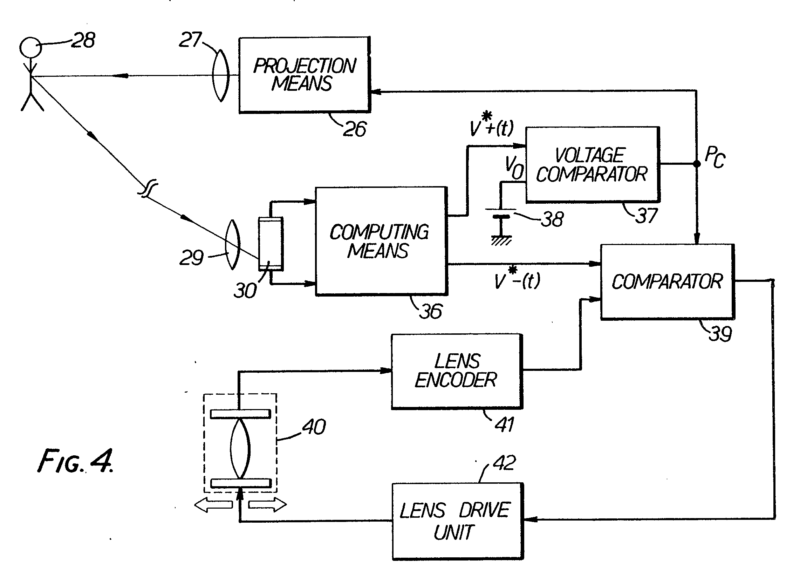

Referring to Fig. 4, a light projection means 26 projects a distance measuring infrared ray in the form of repeating the light emission intermittently in a predetermined frequency fc during the light emission repeated in every constant cycle period, the distance measuring infrared ray reaching an object 28 through a converging lens 27, the reflected light from an object being image-formed as the spot on the surface of a well-known light position detector 30, such as a PSD (Position Sensitive Device), by means of converging lens 29. The light spot on the surface of light position detector 30 varies univocally in a predetermined direction corresponding to a distance between the spot and the object.

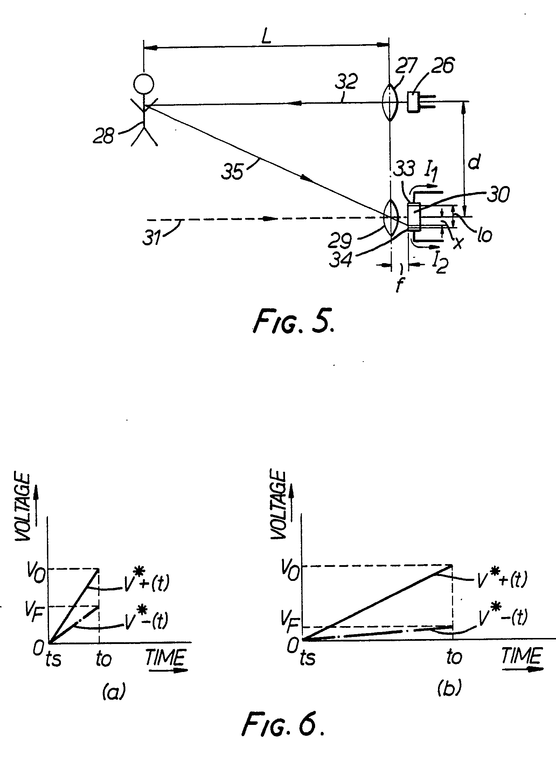

Now, explanation will be given on the relation between the position of the spot and the distance to the object with reference to Fig. 5. In Fig. 5, the light projection means 26 and light position detector 30 of effective length lo are provided spaced at the centers from each other at an interval d, and a converging lens 29 is disposed ahead of the light position detector 30 only by a distance about equal to a focal distance of the same, thereby well image-forming the reflected light from the object 28 onto the surface of the light position detector 30. Now, the light position detector 30 is disposed to receive at the center thereof and reflected light 31 (to be considered parallel to the distance measuring infrared ray 32 projected from the light projection means 26) coming from infinitely far distance and outputted from both and electrodes 33 and 34 equal photocurrents $I_1$ and $I_2$. Then, the reflected light 35 from the object 28 positioned apart from the converging lens 27 by a distance L shifts downwardly only by length x from the center of light position detector 30 as shown in Fig. 5. Under simple geometrical consideration in Fig. 5, the shift quantity is given by the following equation:

$$x = \frac{d \cdot f}{L} \qquad (4)$$

The two photocurrents $I_1$ and $I_2$ outputted from the light position detector 30 are inversely proportional to the distances between the output terminal electrodes 33 and 34 and the light spot respectively, so that the photocurrents $I_1$ and $I_2$ are given by the following equations:

$$I_1 = \frac{\dfrac{I_o}{2} - x}{I_o} \cdot I_o \qquad (5)$$

and

$$I_2 = \frac{\dfrac{I_o}{2} + x}{I_o} \cdot I_o \qquad (6),$$

where $I_o$ represents the whole quantity of current. Next, the equations (4), (5) and (6) are changed to obtain the following equation:

$$\frac{I_1 - I_2}{I_1 + I_2} = -\frac{2x}{I_o} \qquad (7)$$

$$= -\frac{2d \cdot f}{I_o} \cdot \frac{1}{L} \qquad (8)$$

Thus, it is seen from the equation (8) that the inverse number (1/L) is proportional to the quantity

$$\left( \frac{I_1 - I_2}{I_1 + I_2} \right).$$

The rotation angle of the helicoid of the usual photographing lens focusing mechanism is approximately proportional to the inverse number of the distance from the object, so that, when the rotation angle of the helicoid of the photographing lens is detected, the automatic focusing is possible.

Next, referring again to Fig. 4, explanation will be given on operation of the focusing device measurable of distance with high accuracy while current consumption of distance measuring infrared LED is largely saved, which is an essential point of the invention.

In addition, the computing means 36 outputs values $V_+^*(t)$ and $V_-^*(t)$ are proportional to the sum of and difference between the two photocurrent outputs from the light position detector 30.

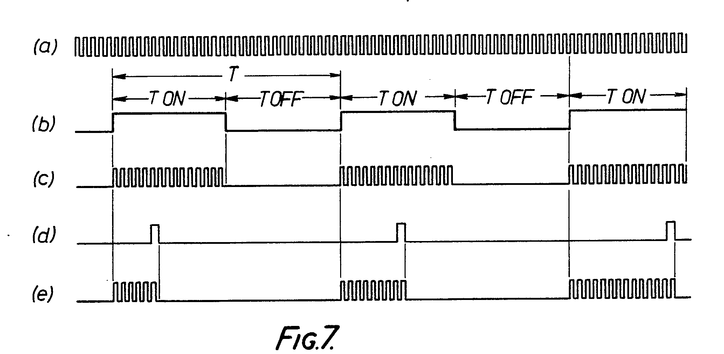

The explanation will be continued with reference to Fig. 6 as well as Fig. 5. Fig. 6-(a) is a waveform chart for the object at a short distance, and Fig. 6-(b) is the same schematically showing output waveforms of the computing means 36. For simplification of description, when both $V_+^*(t_s)$ and $V_-^*(t_s)$ is assumed to be zero at the instant that the infrared LED 26 starts to project the distance measuring infrared ray at the time $t_s$, that is,

$$V_+^*(t_s) = V_-^*(t_s) = 0 \qquad (9).$$

Also, $V_+^*(t)$ and $V_-^*(t)$ are assumed to increase with the lapse of time. The voltage comparator 37 compares the output $V_+^*(t)$ with a reference voltage value $V_o$ produced by a reference power source 36, and after the light projection means 26 starts light projection at the time $t_s$, outputs a control pulse Pc at the time of allowing the output $V_+^*(t)$ to coincide with the reference voltage value $V_o$. The control pulse Pc gives the timing for defining the following value $V_F$ corresponding to the difference between the two photocurrents at the time $t_o$:

$$V_F = V_-*(t_o) \qquad (10).$$

Also, the control pulse Pc acts on the light-projection means 26 to force the distance measuring infrared ray to be stopped. The comparator 39 compares the value $V_F$ with the output of the lens encoder 41 which detects a quantity of movement or rotation (showing a deviation from the focussed state) of the photographing lens 40, and operates the lens drive unit 42 to move the photographing lens 40 forwardly or backwardly until the value $V_F$ and the output of the lens encoder 41 correspond properly to each other.

The $V_F$ in the equation 10 is proportional to a normalized value obtained from the value of

$$\{V_-*(t)/V_+*(t)\}$$

by assuming

$$V_+*(t) = V_o \ (t=t_o) \qquad (11).$$

Hereinafter, $V_F$ is called the normalized distance voltage.

Hence, only by obtaining $V_+*(t)$ at the time $t_o$ without dividing $V_-*(t)$ by $V_+*(t)$, a value proportional to

$$[\{l_1(t)-l_2(t)\}/\{l_1(t)+l_2(t)\}],$$

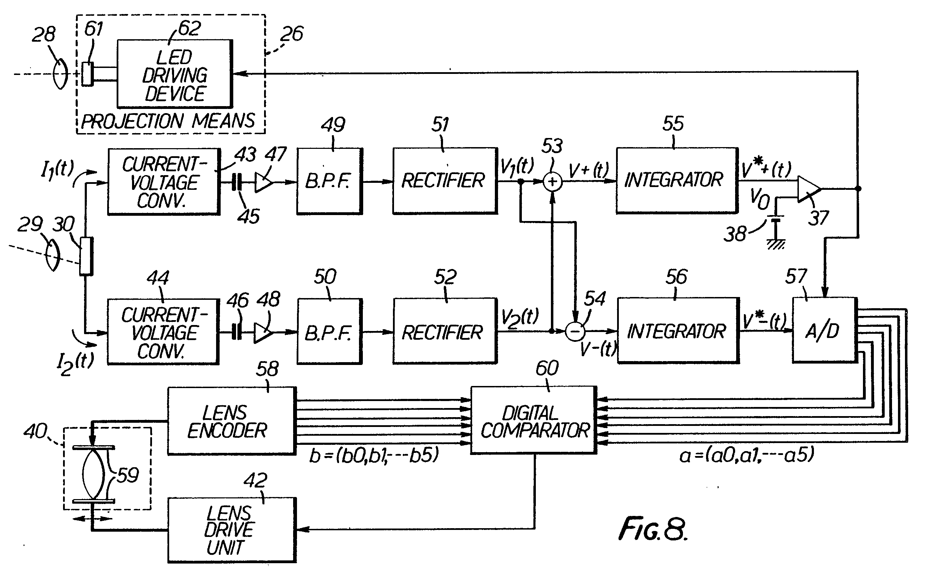

in other words, the value proportional to the inverse number of the distance, is obtained. Also, the driving time of the light projection means 26 is changeable according to the distance therefrom to the object to thereby enable large reduction of current consumption for driving the infrared LED. The reason for this is that, in this embodiment, the use of the control pulse Pc controls the projecting time of the distance measuring infrared ray as shown in Fig. 7. The basic form of light emission in this embodiment is repetition of a light emission time period $T_{ON}$ and a non-emission time period $T_{OFF}$ at a predetermined cycle period T as shown in Fig. 7-(b) so that in the light emission time period $T_{ON}$, the constant frequency fc shown in Fig. 7-(a) repeats intermittent light emission to be as shown in Fig. 7-(c), where

$$T_{ON} = T_{OFF} \qquad (12)$$

and

$$fc \gg 1/T \qquad (13).$$

Next, when the distance measuring infrared ray is projected in the aforesaid light emission time period and the control pulse Pc is outputted after the lapse of the predetermined time as shown in Fig. 7-(d), since the infrared LED driving device forcibly stops the light emission, the time of light emission is limited in accordance with the distance to be measured as shown in Fig. 7-(e). The quantity of the distance measuring infrared ray reflected from the object and receiving by the light spot detector (to be hereinafter called the received quantity of light) of course remarkably changes corresponding to the distance L between the detector and the object so that for the object in a short distance, the received quantity of light is large (for example, when an infrared LED of sharp directivity is used, the received quantity of light for L=1 m becomes about 100 times larger than that for L=10 m), the control pulse Pc being generated soon after the emission of the distance measuring infrared ray. In brief, the reference voltage $V_o$ for generating the control pulse $P_c$ need only be set to a value by which the distance measurement of sufficiently high accuracy and in the farthest distance is performable. In addition, in Fig. 6, the value of normalized distance voltage $V_F$ with respect to the object in a short distance is larger than that of $V_F$ with respect to the same in a long distance because the value of $\{l_1(t)-l_2(t)\}$ with respect to the object in a short distance is larger than the value of $\{l_1(t)=l_2(t)\}$ with respect to the object in a long distance.

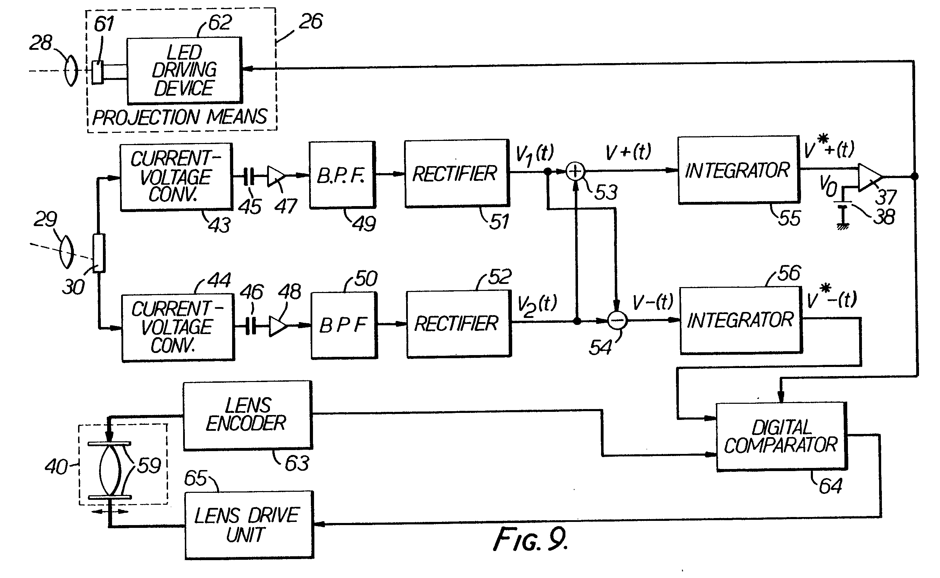

Next, second to sixth modified embodiments of the invention will be shown further concretely in Figs. 8, 9, 10 and 11.

In Fig. 8, two photocurrent outputs $l_1(t)$ and $l_2(t)$ from the light spot detector 30 are converted to voltages by first and second current-voltage converters 43 and 44, and the converted voltages are given to first and second amplifiers 47 and 48 through first and second capacitors 45 and 46, and removed of the DC noise components and amplified of the AC optical signal component only at a predetermined multiplying factor by the amplifiers 47 and 48 respectively. Output voltages of first and second amplifiers 47 and 48 are of repetition waveforms rectangular or square in synchronism with the driving frequency fc of infrared LED and first and second intermediate frequency bandpass filters 49 and 50 (to be hereinafter called B.P.F.) are so constructed that the center frequencies thereof coincide with the driving frequency fc, thereby removing the noise components from the outputs of first and second amplifiers 47 and 48 respectively. First and second rectifiers 51 and 52 output DC voltages $V_1(t)$ and $V_2(t)$ proportional to AC signal amplitude values of outputs of the first and second B.P.F. 49 and 50 respectively. An adder 53 adds DC voltages $V_1(t)$ and $V_2(t)$ outputted from the first and second rectifiers 51 and 52 to compute the value $V_+(t)$ proportional to the value of $\{V_1(t)+V_2(t)\}$, and a subtractor 54 substracts DC voltages $V_1(t)$ and $V_2(t)$ outputted from the first and second rectifiers 51 and 52 so as to output a value $V_-(t)$ proportional to $\{V_1(t)-V_2(t)\}$. Thus the following equations are obtained:

$$V_+(t) = \alpha \cdot \{V_1(t)+V_2(t)\} \qquad (14)$$

and

...

$$V_-(t) = \beta \cdot \{V_1(t) - V_2(t)\} \qquad (15)$$

(where α, β: constant).

A first integrator 55 carries out voltage-current conversion corresponding to a DC voltage value outputted from the adder 53, uses the constant current to charge a capacitor (not shown), and outputs an integrated value $V_+{}^*(t)$ of waveform increasing approximately linearly with the lapse of time. A second integrator 56 carries out voltage-current conversion corresponding to the DC voltage value outputted from the subtractor 54, and carries out integration computation to thereby output a value $V_-{}^*(t)$.

The above series of computation processes holds the linearity of signal, so that the output value $V_+{}^*(t)$ of the first integrator 55 is proportional to $\{I_1(t) + I_2(t)\}$ and that $V_-{}^*(t)$ of the second integrator 56 to $\{I_1(T) - I_2(t)\}$.

An adoptable voltage range, in other words, a changeable range of $V_F$ when the distance between the object and the photographing lens changes from the smallest distance to the infinite far distance, is divided into 64 and outputted as a digital signal $a = (a_0, a_1, a_2...a_5)$ of 6 bits. The photographing lens 40 (schematically shown by one convex lens, but actually comprising a plurality of lenses) is detected of its focal spot by a lens encoder 58, the focal spots are outputted as a position signal $b = (b_0, b_1...b_5)$ of 6 bits and divided into 64 of the range (angle of helicoid or the like) from the smallest distance to the infinite far distance, the lens encoder 58 being used which keeps its mechanical contact with a focusing mechanism 59, such as the helicoid or the like, usually provided at a focusing lens unit of the photographing lens 40 and which moves for focusing to output the position detection signal. A digital comparator 60 compares the bits of each corresopnding digit in the digital signal a outputted from the analog to digital converter (A/D converter) 57 with those in the digital signal b outputted from the lens encoder 58. A lens driving unit 42 receives the output of digital comparator 60 to drive the focusing mechanism 59 at the photographing lens 40 in the proper direction for obtaining such a condition as a=b, and stop the mechanism 59 at the optimum focusing spot, thus completing the automatic focusing.

In Fig. 8, reference numeral 26 shows a projecting means comprising an infrared LED 61 and a LED driving device 62, and reference numerals 37 and 38 show a voltage comparator and a reference voltage source respectively (the functions thereof have already been described before with reference to Fig. 4).

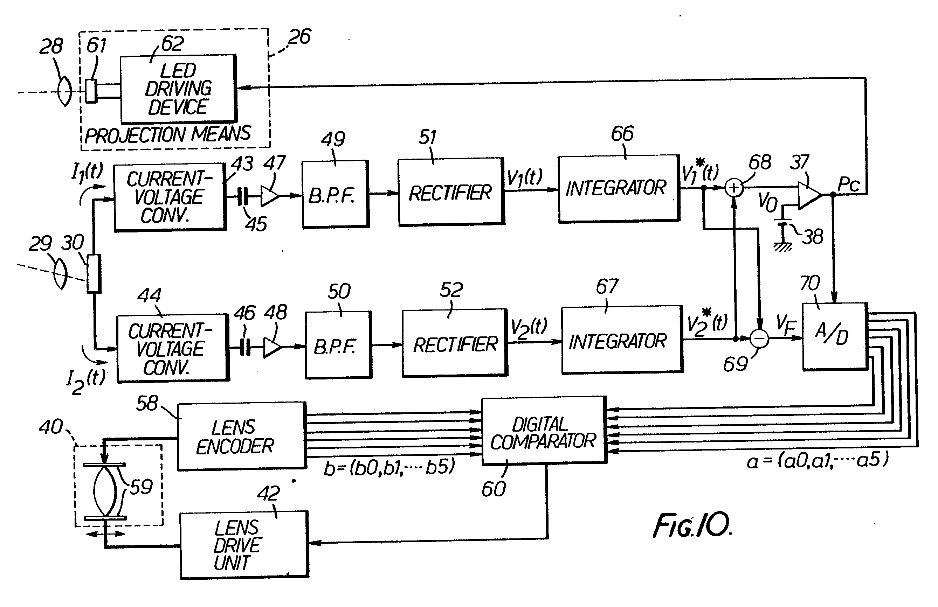

Fig. 9 is a block diagram of the third embodiment of the invention. Since the third embodiment includes many components in common with those in the second embdoiment, the common components are designated by the reference numerals used in Fig. 8. The third embodiment is different from the second one in that a comparator 64 compares an analog output value of the second integrator 56 directly with an analog position detection signal outputted from a lens encoder 63 (while in the second embodiment, the A/D converter 57 converts the analog output value $V_F$ into a digital signal so that the coincidence of output value is compared by a digital comparator 60 with a digital position detection signal outputted from a lens encoder 58). Hence, the lens encoder 63 is adapted to keep mechanical contact with the focusing mechanism 59, such as the helicoid, provided at the photographing lens 40 and output the position detection signal of voltage value analogically changeable in association with the movement for focusing. Furthermore, a range of the output voltage value of lens encoder 63 is adapted to coincide with a changeable range (that of $V_F$ when the distance between the object and the photographing lens changes from the smallest distance to infinite) adoptable by the normalized distance voltage $V_F$. The comparator 64 compares the normalized distance voltage $V_F$ at the instant of generating the control pulse Pc with the output value of lens encoder 63 and a lens drive unit 65 is operated so that both the voltage $V_F$ and output value act on a lens dividing unit 65 so as to coincide with each other, thereby moving the photographing lens 40 to the optimum focusing spot and stopping the lens 40 thereat, thus completing the automatic focusing. This embodiment need not use an A/D converter to digitize once the normalized distance voltage $V_F$, thereby simplifying the construction of the device.

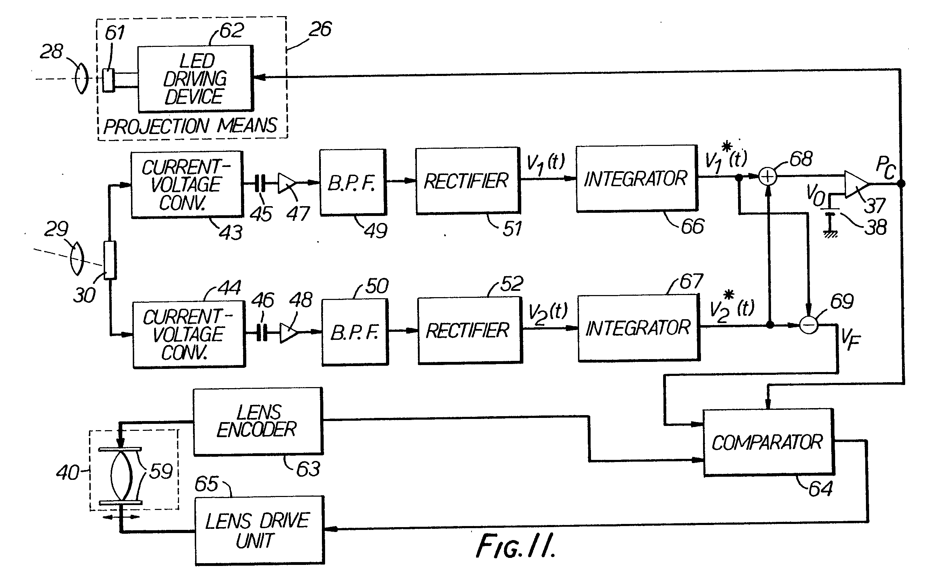

Next, the fourth embodiment is shown in Fig. 10, in which the two photocurrent outputs $I_1(t)$ and $I_2(t)$ given from the light spot detector 30 are converted to voltages by the first and second current-voltage converters 43 and 44. The voltages pass through first and second capacitors 45 and 46, removed of the DC noise components by first and second amplifiers 47 and 48, and amplified only the AC signal light components at a predetermined multiplying factor. The output voltages of the first and second amplifiers 47 and 48 are of repetition waveforms rectangular or square and in synchronism with the driving frequency fc at the infrared LED driving device 62. First and second intermediate frequency bandpass filter (to be hereinafter abbreviated as B.P.F.) 49 and 50 are so constructed that the central frequencies coincide with the driving frequency fc, thereby removing the noise component from the outputs of the first and second amplifiers 47 and 48.

First and second rectifiers 51 and 52 output DC voltages $V_1(t)$ and $V_2(t)$ proportional to AC signal amplitude values of the first and second B.P.Fs. 49 and 50 respectively. First and second integrators 66 and 67 carry out voltage-current conversion according to the output voltage values (DC) of the rectifiers to charge a capacitor (not shown) by a constant current and output integrated values $V_1{}^*(t)$ and $V_2{}^*(t)$ of waveforms increasing about linearly with a lapse of time. An adder 68 adds the output values of the two integrators to compute the value proportional to $\{V_1{}^*(t) + V_2{}^*(t)\}$ (hence,

that proportional to $\{I_1(t)+I_2(t)\}$) and a subtractor 69 carries out subtraction between the output values $V_1^*(t)$ and $V_2.(t)$ of the two integrators and computes a value proportional to $\{V_1^*(t)-V_2^*(t)\}$ (hence, that proportional to $\{I_1(t)-I_2(t)\}$).

The A/D converter 70 divides the voltage range (a changing range of $V_F$ when the distance between the object and the photographing lens 40 changes from a short distance to infinite) equally into 64 and outputs the same as digital signal $a=(a_0, a_1,...a_5)$ of 6 bits. Also, the photographing lens 40 (schematically shown by one convex lens, but actually comprising a plurality of lenses) is detected of its focusing spot by a lens encoder 58 and outputs a spot detection signal $b=(b_0, b_1,...b_5)$ of 6 bits obtained by dividing the range (an angle of helicoid or the like) from the object in the smallest distance to infinite equally into 64. A digital comparator 60 compares the bits at each corresponding digit of the digital signal a outputted from the A/D converter 70 with those of the digital signal b outputted from the lens encoder 58.

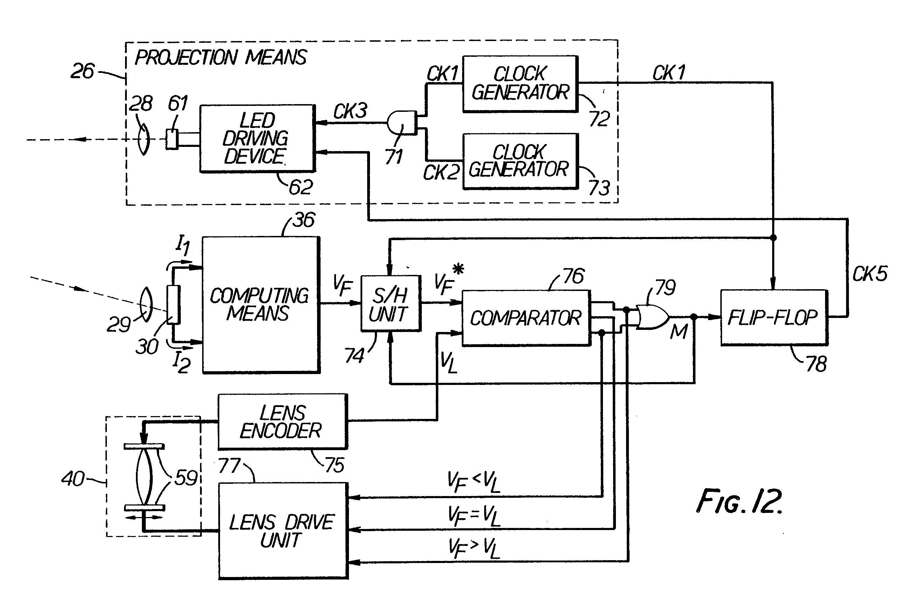

Next, explanation will be given on the fifth embodiment in Fig. 11, in which the many components in common with those in the three embodiments are designated by the same reference numerals in Fig. 10. The fifth embodiment is so constructed that an analog output value of a subtractor 69 is compared directly with an anlog position detection signal outputted from a lens encoder 63 by means of a comparator 64. Accordingly, the lens encoder 63 keeps mechanical contact with a focusing mechanism 59, such as a helicoid, provided at the photographing lens 40 and outputs a position detection signal of voltage value changeable analogically in association with the movement of mechanism 59 for focusing. Also, the range of output voltage value of lens encoder 63 is adapted to coincide with a changeable range (that of $V_F$ when the distance between the object and the photographing lens 40 changes from the smallest distance to infinite). A comparator 64 compares the normalized distance voltage $V_F$ at the instant of generating the control pulse Pc with the output value of lens encoder 63 and acts on a lens drive unit 65 to coincide both the distance voltage $V_F$ and output value of encoder with each other, thereby moving the photographing lens 40 to the optimum focusing spot and stopping it thereat, thus completing the automatic focusing.

In addition, the aforesaid embodiments each have no mechanical moving portion at the distance measuring projection unit and light receiving unit and need not associate with the photographing lens, so that the projection unit and light receiving unit are decidable of its mounting position regardless of the photographing lens, thereby being very effective in design of the video camera photographing mechanism provided with the automatic focusing device.

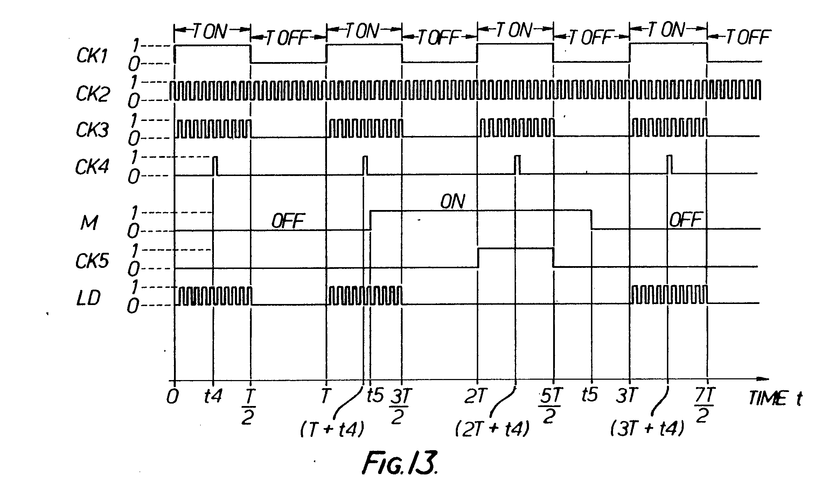

Fig. 12 is a block diagram of a lens drive unit which is so constructed to largely save current consumption of the distance measuring LED.

Usually, an infrared LED driving device 62 operates with receiving a logical product output $CK_3$ of an output $CK_1$ of a first clock generator 72 regulating the repeating cycle period T of the light emission time period $T_{ON}$ and the stop time period $T_{OFF}$ produced by an AND circuit 71 and an output $CK_2$ of a second clock generator 73 regulating the modulation frequency fc of the distance measuring infrared ray, wherein T, $T_{ON}$, $T_{OFF}$ and fc have therebetween the following relations:

$$T=T_{ON}+T_{OFF}$$

$$T_{ON}=T_{OFF}$$

$$fc \gg 1/T$$

Hence, the photocurrents $I_1$ and $I_2$ outputted from the light spot detector 30 are of modulated waveform rectangular or sine-waved in synchronism with the modulation frequency fc, thereby being adapted to be distinguished from the ambient optical noise components. A computing means 36 computes from the photocurrents $I_1$ and $I_2$ a value $V_F$ proportional to $\{(I_1-I_2)/(I_1+I_2)\}$, and the value $V_F$ is given in the following equation:

$$V_F=a \cdot \frac{I_1-I_2}{I_1+I_2} \text{(a: constant).}$$

A sample hold unit 74 outputs a value $V_F^*$ sample-holding the computing element output $V_F$ by a timing generated newly by itself (pulse for regulating the timing is represented by $CK_4$) on the basis of a timing given by the first clock generator 72. The focusing spot of photographing lens 40 (schematically shown by one convex lens, but actually comprising a number of lenses), in turn a quantity of movement of focusing mechanism 59 for moving a focusing lens group (not shown), is detected by a lens encoder 75 keeping mechanical contact with the focusing mechanism 59 and in association with focussing movement thereof, and regulated by a constasnt voltage value of the range from the smallest distance for photographing to infinite so as to be outputted as a position detection signal $V_1$. A comparator 76 compares the sample-hold value $V_F^*$ with a position detection signal $V_L$ to output either one of three kinds of two not-coincident signals $V_F^*+V_L$ and $V_F^*>V_L$ and one coincident signal $V_F^*=V_L$. A lens drive unit 77 follows the output signal of comparator 76 to drive the focusing mechanism 59 as, for example, in the following manner:

When $V_F<V_L$, drive forward:

When $V_F=V_L$, stop; and

When $V_F>V_L$, drive backward.

A flip-flop circuit 78 outputs a light emission control signal $CK_5$ only at each pulse rising time regulating the light emission time period outputted from a first clock generator 72. In other words, in a case where, at each time of starting the light emission, either one of the two kinds of not-coincident signals is outputted from the comparator 76 through an output M of an OR circuit 79 (that is, when the focusing mechanism 59 at the photographing lens is moving), the light emission control signal $CK_5$ acts on the infrared LED driving device, neglects the outputs of first and second clock generators 72 and 73, and forcibly stops the projection of distance measuring infrared ray in the light emitting period. In brief, in this embodiment, the OR circuit 79 serves as the lens movement detector and the flip-flop circuit 78 as the light emission control device, at which time the timing across each signal is arranged by use of the representation in Fig. 13, in which reference M designates the existance of "drive" by the lens drive unit 77, and LD designates actual "drive" of the infrared LED 61 (the state "1" shows "drive" and that "0" a "stop"). Now, assuming that, at the time t=0, the photographing lens 40 focuses, the infrared LED 61 is subjected to the output of $CK_3$ and driven; at the time $t=t_4$, the computing element's output $V_F$ is sample-held, and the comparator 76 checks the focusing condition. Next, when the object moves to $t_4<t<(T+t_4)$ and the distance thereto changes, the comparator 76 is subjected to $CK_4$ pulse outputted at $t=(T+t_4)$ and generates the not-coincident signal at $t=t_5$ to thereby invert the condition of OR circuit 79 also (M=1), at which time the lens driving unit 77 starts to move for refocusing the photographing lens 40. Since the movement is carried out during $t_5<t<t_5'$, at the next rise time $t=2T(<t_5')$ of $CK_1$ pulse, M=1 is obtained, and, during the period of $2T<t<5T/2$, $CK_5=1$ is obtained, so that the infrared LED 61 is not driven.

Since the lens driving unit 77 completes the focusing and stops of the $CK_1$ pulse rise time t=3T, M=0 again is developed to allow the infrared LED 61 to emit the light and the focusing once more is confirmed. In addition, the data reset at the sample hold unit 74 is carried out usually at the timing of $CK_1=0$, but only in the time period of not driving the infrared LED 61 (the period of M=1), the reset is not carried out even when $CD_1=0$, so that the former output results of computing element are adapted to be given directly into the comparator.

## Claims

1. An automatic focusing device for a video camera, comprising a projection means (26, 27) for projecting a distance measuring ray, a converging lens (29) for converging the distance measuring ray which has been reflected from an object to be photographed, a light portion detector (30) positioned at a focus of said converging lens for outputting two photocurrents which have a ratio therebetween varying corresponding to a position of a light spot formed on said light position detector by the reflected distance measuring ray, a computing means (36) for computing a sum of and a difference between said two photocurrents, a photographic lens (40) for photographing said object including a focusing lens for focusing said photographic lens, a lens encoder (41) for detecting a position of said focusing lens and outputting a focus lens position signal indicative of the detected position, a control means (37, 39) for producing a distance indicating signal indicative of a distance to said object from the sum of and the difference between said two photocurrents and producing a difference signal between said distance indicating signal and said focus lens position signal, and a lens driving means (42) for driving said focusing lens forwardly or backwardly according to said difference signal, characterised in that said control means (37, 39) comprises: a first comparator (37) which compares, after said projection means (26) starts ray projection, the sum of said two photocurrents with a predetermined value and outputs a control pulse when the value of the sum of said two photocurrents reaches said predetermined value; and a second comparator (39) which is responsive to said control pulse for holding, as said distance indicating signal, a value of the difference between said two photocurrents at the time of having received said control pulse and comparing the held value of the difference between said two photocurrents with said focusing lens position signal to produce, as said difference signal, a signal indicative of a difference between the held value and said focusing lens position signal, whereby said lens driving means (42) drives said focusing lens until the value of said focusing lens position signal reaches the held value of the difference between said two photocurrents, said control pulse being applied also to said projection means (26) to allow said projection means to stop ray projection.

2. An automatic focusing device for a video camera as set forth in claim 1, wherein said computing means (36) comprises first and second integrators (66, 67) which integrate said two photocurrents individually and output voltage values linearly increasing and decreasing respectively, an adder (68) for adding the output values of said first and second integrators, and a subtractor (69) for subtracting the output values of said first and second integrators.

3. An automatic focusing device for a video camera as set forth in claim 1, wherein said computing means (36) comprises two current-voltage converters (43, 44) for converting said two photocurrents to two voltages, an adder (53) for adding the two voltages of said two current-voltage converters, a first integrator (55) for charging a capacitor (38) with a constant current corresponding to an amplitude value of an output of said adder and outputting a voltage value about linearly increasing or decreasing, a subtractor (54) for subtracting the two voltages of said two current-voltage converters, and a second integrator (56) which charges a capacitor with a constant current corresponding to an amplitude value of an output of said subtractor and outputs a voltage value about linearly increasing or decreasing.

4. An automatic focusing device for a video camera as set forth in claim 1, wherein said lens encoder (41) divides into a predetermined number of divisions of the movement of said focusing lens corresponding to a photographing distance from a smallest distance to infinite and outputs digital signals having the number of bits corresponding to the predetermined number of divisions of the movement, and said second comparator (39) comprises an analog-digital converter for dividing a signal range of the difference between said two photocurrent outputs into the same number of divisions so that of said lens encoder, and a digital comparator for comparing the output value of said analog-digital converter with the output value of said lens encoder digitally at every corresponding bit.

5. An automatic focusing device for a video camera as set forth in claim 1, wherein said lens encoder (41) outputs an analog voltage signal which changes linearly in response to the movement of said focusing lens corresponding to a photographing distance from a smallest distance to infinite, a signal range of the difference between said two photocurrent outputs being set to be equal to a signal range obtainable by said lens encoder, said second comparator (39) being adapted to analogically compare the difference between said two photocurrent outputs with the output value of said lens encoder.

6. An automatic focusing device for a video camera as set forth. in claim 1, wherein said projection means (26) comprises a lens movement detector which detects by an output of said comparator whether or not said focusing lens group is moving, a clock generator which regulates a repeating cycle of projection and stopping of the distance measuring ray and a modulation frequency of said distance measuring ray, and a light-emission control device (78) which drives said projection means on the basis of the output of said clock generator and inspects the output of said lens movement detector at the starting time of each of the ray projection time period so that, when said focusing lens is moving, the output of said clock generator is neglected and said projection of said distance measuring ray within the ray projection time period is forced to stop.

**Patentansprüche**

1. Eine automatische Fokussiereinrichtung für eine Videokamera, mit einer Projektionseinrichtung (26, 27) zum Projizieren eines Entfernungsmeßstrahls, einer konvergierenden Linse (29) zum Konvergieren des Entfernungsmeßstrahls, der von einen zu fotografierenden Objekt reflektiert wird, einen in einem Brennpunkt der konvergierenden Linse angeordneten Lichtpositionsdetektor (30) für die Ausgabe von zwei Photoströmen, deren Verhältnis untereinander entsprechend einer Position eines auf dem Lichtpositionsdetektor durch den Entfernungsmeßstrahl gebildeten Lichtflecks variiert, mit einer Berechnungseinrichtung (36) für die Berechnung einer Summe von und einer Differenz zwischen den zwei Photoströmen, mit einer fotografischen Linse (40), zum Fotograpieren des Objekts, die eine Fokussierlinse zum Fokussieren der fotografischen Linse umfaßt, mit einen Linsenkodierer (41) zum Ermitteln einer Position der Fokussierlinse und zur Ausgabe eines die ermittelte Position anzeigenden Fokussierlinsenpositionssignals, mit einer Steuerungseinrichtung (37, 39) für die Bildung eines eine Entfernung zum Objekt anzeigenden Entfernungsanzeigesignals aus der Summe von und der Differenz zwischen den zwei Photoströmen und die Bildung eines Differenzsignals zwischen dem Entfernungsanzeigsignal und dem Fokussierlinsenpositionssignal, und mit einer Linsenantriebseinrichtung (42) für die Bewegung der Fokussierlinse vorwärts oder rückwärts entsprechend dem Differenzsignal, dadurch gekennzeichnet, daß sie Steuereinrichtung (37, 39) umfaßt: einen ersten Komparator (37), der nach Beginn der Strahlprojektion durch die Projektionseinrichtung (26) die Summe der zwei Photoströme mit ienem vorbestimmten Wert vergleicht und einen Steuerimpuls abgibt, wenn der Wert der Summe der zwei Photoströme diesen vorbestimmten Wert erreicht; und einen zweiten auf den Steuerimpuls reagierenden Komparator (39) zum Erfassen eines Wertes der Differenz zwischen den zwei Photoströmen als Entfernungsanzeigesignal zu dem Zeitpunkt, an dem der Steuerimpuls enpfangen worden ist, und zum Vergleichen des erfaßten Wertes der Differenz zwischen den zwei Photoströmen mit dem Fokussierlinsenpositionssignal, um, als Differenzsignal, ein eine Differenz zwischen dem erfaßten Wert und dem Fokussierlinsenpositionssignal anzeigendes Signal zu bilden, wobei die Linsenantriebseinrichtung (42) die Fokussierlinse bewegt, bis der Wert des Fokussierlinsenpostionssignals den erfaßten Wert der Differenz zwischen den zwei Photoströmen erreicht, wobei der Steuerimpuls auch an die Projektionseinrichtung (26) gelegt wird, um der Projektionseinrichtung zu gestatten, die Strahlprojektion abzubrechen.

2. Eine automatische Fokussiereinrichtung für eine Videokamera nach Anspruch 1, wobei die Berechungseinrichtung (36) erste und zweite Integratoren (66, 67), die die zwei Photoströme einzeln integrieren und linear ansteigende bzw. abfallende Spannungswerte abgeben, einen Andierer (68) zum Addieren der Ausgabewerte der ersten und zweiten Integratoren, und einen Subtrahierer (69) zum Substrahieren der Ausgabwerte der ersten und zweiten Integratoren umfaßt.

3. Eine automatische Fokussiereinrichtung für eine Videokamera nach Anspruch 1, wobei die Berechnungsseinrichtung (36) zwei Strom-Spannungs-Konverter (43, 44) zum Umwandeln der zwei Photoströme in zwei Spannungen, einen Addierer (53) zum Addieren der zwei Spannungen der zwei Strom-Spannungs-Konverter, einen ersten Integrator (55) zum Laden eines Kondensators (38) durch einen konstanten Strom, der einem Amplitudenwert eines Ausgabewertes des Addierers entspricht, und zum Ausgeben eines etwa linear ansteigenden oder abfallenden Spannungswertes, einen Subtrahierer (54) zum Subtrahieren der zwei Spannungen der zwei Strom-Spannungs-Konverter, und einen zweiten Integrator (56), der einen Kondensator durch einen konstanten Strom, der einem Amplitudenwert eines Ausgabewertes des Subtrahierers entspricht, lädt, und einen etwa linear ansteigenden oder abfallenden Spannungswert abgibt.

4. Eine automatische Fokussiereinrichtung für eine Videokamera nach Anspruch 1, wobei der Linsenkodierer (41) die Bewegung der Fokussierlinse entsprechend einer Fotografierentfernung von einer kleinsten Entfernung biz ins Unendliche in eine vorbestimmte Anzahl von Bewegungsabschnitten unterteilt, und digitale Signale mit der Bitanzahl entsprechende der vorbestimmten Anzahl von Bewegungsabschnitten abgibt, und der zweite Komparator (39) einen Analog-Digital-Konverter zum Teilen eines Signalbereiches der Differenz zwischen den zwei Photostromausgabewerten in die gleiche Abschnittsanzahl wei die des Linsenkodierers, und einen digitalen Komparator zum Vergleichen des Ausgabwertes des Analog-Digital-Konverters mit dem Ausgabewert des Linsenkodierer digital für jedes entsprechende mit umfaßt.

5. Eine automatische Fokussiereinrichtung für eine Videokamera nach Anspruch 1, wobei der Linsenkodierer (41) ein Analogspannungssignal, das sich linear in Reaktion auf die Bewegung der Fokussierlinse entsprechend einer Fotografierentfernung von einer kleinsten Entfernung bis ins Unendliche ändert, ein Signalbereich der Differenz zwischen den zwei Photostromausgangswerten gleich eines Signalbereich, der von dem Linsenkodierer erhalten werden kann, gesetzt wird, der zweite Komparator (39) verwendet wird, um analog die Differenz zwischen den zwei Photostromausgabewerten mit den Ausgabewerten des Linsenkodierers zu vergleichen.

6. Eine automatische Fokussiereinrichtung für eine Videokamera nach Anspruch 1, wobei die Projektionseinrichtung (26) einen Linsenbewegungsdetektor, der durch einen Ausgabewert des Komparators ermittelt, ob die Fokussierlinsengrupppe in Bewegung ist oder nicht, einen Taktgenerator, der einen Wiederholungszyklus der Projektion und das Abschalten des Entfernungsmeßstrahls und einer Modulationsfrequenz des Entfernungsmeßstrahls reguliert, und ein Lichtemissionssteuergerät (78), das die Projektionseinrichtung auf der Basis der Ausgabe des Taktgenerators betreibt und den Ausgabewert des Linsenbewegungsdetektors zur Startzeit von jeden der Strahlprojektionszeitabschnitte überprüft, so daß, wenn sich die Fokussierlinse bewegt, der Ausgabewert des Taktgenerators nicht berücksichtigt wird und ein Stop der Projektion des Entfernungsmeßstrahls innerhalb des Strahlprojektionszeitabschnittes erzwungen wird.

**Revendications**

1. Dispositif de focalisation automatique pour une caméra vidéo, comportant un dispositif de projection (26, 27) pour projeter un rayon de mesure de distance, une lentille convergente (29) destinée à faire converger le rayon de mesure de distance qui a été réfléchi par un objet à photographier, un détecteur de position de lumière (30) positionné au foyer de ladite lentille convergente pour émettre deux courants photoélectriques ayant entre eux un rapport qui varie en correspondance avec la position d'un point lumineux formé sur ledit détecteur de position de lumière par le rayon de mesure de distance réfléchi, un dispositif de calcul (36) destiné à calculer la somme et la différence entre les deux courants photoélectriques, un objectif photographique (40) destiné à photographier ledit objet, comprenant une lentille de focalisation pour focalter ledit objectif photographique, un codeur de lentille (41) qui détecte la position de ladite lentille de focalisation et qui émet de signal de position de lentille de focalisation indiquant la position détectée, un dispositif de commande (37, 39) pour produire un signal indicateur de distance représentant la distance vers ledit objet à partir de la somme et de la différence entre lesdits courants photoélectriques et produisant un signal de différence entre ledit signal indicateur de distance et ledit signal de position de lentille de focalisation et un dispositif d'entraînement de lentille (42) qui entraîne ladite lentille de focalisation vers l'avant ou vers l'arrière en fonction dudit signal de différence, caractérisé en ce que ledit dispositif de commande (37, 39) comporte: un premier comparateur (37) qui comparé, après que ledit dispositif de projection (26) à commencé la projection du rayon, la somme desdits deux courants photoélectriques avec une valeur prédéterminée et qui émet une impulsion de commande quand la valeur de la somme desdits deux courants photoélectriques atteint ladite valeur prédéterminée, et un second comparateur (39) qui réagit à ladite impulsion de commande en maintenant, comme ledit signal inducteur de distance, une valeur de la différence entre lesdits deux courants photoélectriques au moment de la réception de ladite impulsion de commande et comparant la valeur maintenue de la différence entre lesdits deux courants photoélectriques avec ledit signal de position de lentille de focalisation pour produire, comme ladite signal de différence, un signal indiquant une différence entre la valeur maintenue et ledit signal de position de lentille de focalisation de manière que ledit dispositif d'entraînement de lentille (42) entraîne ladite lentille de focalisation jusqu'à ce que la valeur dudit signal de position de lentille de focalisation atteinge la valeur maintenue de la différence entre lesdits deux courants photoélectriques, ladite impulsion de commande étant appliquée également audit dispositif de projection (26) pour permettre audit dispositif de projection d'interrompre la projection de rayon.

2. Dispositif de focalization automatique pour une caméra vidéo selon la revendication 1, dans lequel ledit dispositif de calcul (36) comporte un premier et un second intégrateurs (66, 67) qui intègrent lesdits deux courants photoélectriques individuellement et des valeurs de tension de sortie qui croissent linéairement et qui décroissent linéairement respectivement, un additionneur (68) pour additionner les valeurs de sortie dudit premier et dudit second intégrateurs et un sous-tracteur (69) qui soustrait les valeurs de sorie dudit premier et dudit second intégrateurs.

3. Dispositif de focalisation automatique pour une caméra vidéo selon la revendication 1, dans lequel ledit dispositif de calcul (36) comporte deux convertisseurs de courant en tension (43, 44) destinés à convertir les deux courants photoélectriques en deux tensions, un additionneur (53) destiné à additionner les deux tensions desdits deux convertisseurs de courant en tension, un premier intégrateur (55) pour charger un condensateur (38) avec un courant constant correspondant à une valeur d'amplitude d'une sortie dudit additionneur et émettant une valeur de tension qui croît ou qui décroît à peu près linéairement, un soustracteur (54) destiné à soustraire les deux tensions desdits deux convertisseurs de courant en tension et un second intégrateur (56) qui charge un condensateur avec un courant constant correspondant à une valeur d'amplitude d'une sortie dudit soustracteur et qui émet une valeur de tension qui croît ou qui décroît à peu près linéairement.

4. Dispositif de focalisation automatique pour une caméro vidéo selon la revendication 1, dans lequel ledit codeur de lentille (41) divise en un nombre prédéterminé de divisions du mouvement de ladite lentille de focalisation correspondant à une distance de photographie depuis une plus courte distance jusqu'à l'infini et qui émet des signaux numériques ayant le nombre des bits correspondant au nombre prédéterminé des divisions du mouvement, et ledit second comparateur (39) consistant en un couvertisseur analogique-numérique qui divise une plage de signaux de la différence entre lesdits deux courants photoélectriques émis dans le même nombre de divisions que celui dudit codeur de lentille et un comparateur numérique qui compare numériquement la valeur de sortie dudit convertisseur analogique-numérique avec la valeur de sortie dudit codeur de lentille à chaque bit correspondant.

5. Dispositif de focalisation automatique pour une caméro vidéo selon la revendication 1, dans lequel ledit codeur de lentille (41) émet un signal de tension analogique qui varie linéairement en réponse au mouvement de ladite lentille de focalisation correspondant à une distance photographique depuis la plus courte distance jusqu'à l'infini, une plage de signaux de la différence entre lesdites deux sorties de courant photoélectrique étant établie pour être égale à une plage de signaux pouvant être obtenue par ledit codeur de lentille, ledit second comparateur (39) étant agencé pour comparer de façon analogique la différence entre lesdites deux sorties de courant photoélectrique avec la valeur de sortie dudit codeur de lentille.

6. Dispositif de focalisation automatique pour une caméra vidéo selon la revendication 1, dans lequel ledit dispositif de projection (26) comporte un détecteur de mouvement de lentille qui détecte par une sortie dudit comparateur si ledit groupe de lentilles de focalisation se déplace ou non, un générateur d'horloge qui régule un cycle de répétitions de projection et qui arrête le rayon de mesure de distance et une fréquence de modulation dudit rayon de mesure de distance, et un dispositif de commande d'émission de lumière (78) qui commande ledit dispositif de projection sur la base de la sortie dudit générateur s'horloge et qui inspecte la sortie dudit détecteur de mouvement de lentille à l'instant de départ de chacune desdites périodes de projection de rayon de manière que, quand ladite lentille de focalisation se déplace, la sortie dudit générateur d'horloge soit négligée et que ladite projection dudit rayon de mesure de distance dans la période de projection de rayon soit forcée à s'arrêter.

EP 0 140 650 B1

FIG.1.

FIG.2.

(a)

13

$I_1$

16

14

$I_2$

(b)

13

$I_1$

16

15

$I_2$

(c)

13

$I_1$

16

17

$I_2$

FIG. 3.

FIG. 4.

EP 0 140 650 B1

FIG. 5.

(a)                    (b)

FIG. 6.

FIG.7.

Fig.8.

FIG. 9.

Fig.10.

EP 0 140 650 B1

FIG. 11.

EP 0 140 650 B1

FIG. 12.

EP 0 140 650 B1

Fig. 13.